# FASCICULE DE BREVET EUROPEEN

(11) **EP 0 854 818 B1**
(45) Date de publication et mention de la délivrance du brevet: **16.06.1999**
(21) Numéro de dépôt: 96933304.6
(22) Date de dépôt: 22.10.1996
(51) Int. Cl.: B62D 61/08, B62D 31/00, B62D 47/00, B62D 21/04

(54) **VEHICULE ROUTIER ULTRA-LEGER**
ULTRALEICHTES STRASSENFAHRZEUG
ULTRA-LIGHT ROAD VEHICLE

(30) Priorité: 23.10.1995 FR 9512951
(43) Date de publication de la demande: 29.07.1998
(73) Titulaire: Thuliez, Jean-Luc, 2520 La Neuveville (CH)
(72) Inventeur: Thuliez, Jean-Luc, 2520 La Neuveville (CH)
(74) Mandataire: Nithardt, Roland
(86) Numéro de dépôt international: CH9600371
(87) Numéro de publication internationale: WO9715484

(56) Documents cités:
- DE-A- 3 027 072
- DE-A- 4 243 455
- FR-A- 2 687 352
- FR-A- 2 694 240

## Description

La présente invention concerne un véhicule routier ultra-léger ne comportant qu'un faible nombre de composants, notamment un véhicule du type appelé "voiture de ville" à vocation pendulaire, en particulier à propulsion électrique, comportant une structure portante, deux roues avant et une roue arrière montées au moyen de suspensions sur cette structure portante et un habitacle indépendant adapté sur cette structure portante, la structure portante comportant une poutre centrale creuse.

On connaît déjà des véhicules destinés à une utilisation comme véhicule de ville, notamment à propulsion électrique. Ils sont la plupart du temps conçus sur le principe d'une miniaturisation des automobiles classiques. De ce fait, ils ont habituellement un châssis ou un habitacle autoportant qui remplit les fonctions de cabine pour les voyageurs et de châssis supportant les bras de suspension des roues, le moteur et tous les éléments périphériques assurant l'entraînement, la direction, les équipements de sécurité, notamment le freinage etc..

Ces véhicules ont habituellement quatre roues qui doivent être suffisamment écartées dans le sens de la longueur et celui de la largeur, c'est-à-dire définir un empattement et une voie suffisants pour garantir une stabilité minimale à l'ensemble. Il en résulte que leur poids est important malgré le recours à des matériaux légers, tels que des composites ou des substances thermoplastiques, en particulier pour l'habitacle. En raison de ce poids, la quantité d'énergie nécessaire à la propulsion devient importante, ce qui constitue un handicap particulièrement grave pour un véhicule à entraînement électrique, sachant que les batteries d'accumulateurs sont lourdes. Or plus le véhicule nécessite d'énergie, plus le volume et le poids de batteries à prévoir seront élevés. La réduction du poids ayant des limites pour les véhicules connus, les développements se sont orientés vers des véhicules à moteur à combustion interne, en attendant l'arrivée sur le marché de batteries plus légères. Actuellement, le poids de base des véhicules de ce type est trop important pour que l'énergie requise pour leur assurer une autonomie optimale pour la fonction à laquelle ils sont destinés, puisse être stockée sous la forme d'énergie électrique, en raison du poids des moyens de stockage de ce type d'énergie.

Outre le problème du poids des véhicules actuels, se pose le problème du nombre de pièces. Un véhicule classique, relativement petit et de bas de gamme comporte plus de 30'000 pièces. Le prix de ces pièces et surtout le coût du montage renchérissent les véhicules à un point tel que le concept "véhicule de ville" n'est économiquement pas rentable.

La publication allemande DE-30 27 072 A1 décrit un véhicule à trois roues qui comporte une structure portante centrale, deux roues arrières motrices et une roue avant directrice. Les sièges des passagers sont disposés de part et d'autre de la structure portante centrale.

Dans la pratique on a constaté que les véhicules à trois roues ayant deux roues à l'arrière et une seule roue à l'avant étaient très instables, leur tenue de route dans les virages étant très inférieure à celle des véhicules à trois roues ayant deux roues à l'avant et une seule roue à l'arrière.

D'autre part, le fait de disposer deux sièges de part et d'autre de la structure portante centrale engendre un véhicule large et encombrant, ce qui est incompatible avec la notion de véhicule de ville.

En outre, cette disposition peut se révéler dangereuse pour les passagers en cas de choc latéral, ces derniers pouvant se trouver coincés contre la structure portante centrale.

La présente invention se propose de pallier ces inconvénients en offrant un véhicule du type susmentionné, conçu de manière à alléger au maximum sa structure de base pour qu'il puisse être entraîné au moyen d'un moteur électrique, sans réduire son autonomie en dessous d'un seuil au-delà duquel le véhicule perd tout son attrait. En outre, sa conception permet un encombrement minimal, notamment pour le stationnement, et sa construction est faite avec un nombre réduit de pièces constitutives.

Ce but est atteint par le véhicule selon l'invention, caractérisé en ce que ladite poutre centrale creuse est constituée par un profilé de section constante extrudé en un matériau léger, en ce que les deux roues avant sont directrices et la roue arrière est motrice et sensiblement située dans le prolongement de ladite poutre centrale, en ce que le moteur de propulsion ainsi qu'une réserve d'énergie sont logés à l'intérieur de ladite poutre centrale creuse, et en ce que l'habitacle indépendant est intégralement fixé à la poutre centrale creuse.

De préférence, le véhicule comporte deux platines avant et une platine arrière, ces platines étant agencées pour s'encastrer au moins partiellement dans des profils d'extrémité de ladite poutre centrale creuse, ces platines étant adaptées pour porter respectivement les suspensions des roues avant et la suspension de la roue arrière.

De préférence, la poutre centrale creuse a sur toute sa longueur un profil en T inversé dont la face inférieure est prolongée latéralement par deux parois latérales disposées symétriquement par rapport à un plan longitudinal médian traversant cette poutre.

Cette structure présente l'avantage d'une fabrication très économique, par extrusion et tronçonnage à la longueur voulue. Les platines sont encastrées dans les extrémités de la poutre centrale creuse et fixées par de simples boulons, ce qui permet un montage ou un démontage rapide et économique.

En outre, les platines avec les suspensions des roues et les roues peuvent être traitées comme des sous-ensembles susceptibles d'être prémontés, ce qui facilite l'assemblage final du véhicule.

La poutre centrale creuse peut accueillir des accessoires ou des composants auquel il est possible d'accéder facilement par simple démontage de l'une ou de l'autre des platines.

Dans la forme de réalisation préférée, la platine arrière porte un support de la roue arrière, ce support comprenant un organe ressort-suspension et deux bras de suspension dont une extrémité est fixée par un axe à cette platine et dont l'autre extrémité porte l'axe de la roue arrière, cette dernière étant disposée entre ledit bras de suspension.

Dans cette forme de réalisation, la platine arrière porte une extrémité d'un organe ressort-suspension, l'autre extrémité étant reliée aux bras de suspension de la roue arrière.

De façon avantageuse, le bras de suspension de la roue arrière est agence pour permettre au véhicule de prendre une position normale et une position raccourcie, les branches pivotantes portant la roue étant disposées sensiblement dans le prolongement de la poutre centrale lorsque le véhicule est dans sa position normale, et ces branches étant inclinées par rapport à cette poutre centrale lorsque le véhicule est dans sa position raccourcie, cette position raccourcie étant atteinte par l'entraînement de la roue arrière motrice et le blocage simultané des roues avant directrices.

Dans la forme de réalisation préférée, les branches pivotantes sont articulées sur la platine arrière et montées sur un axe traversant portant un moteur électrique sur la carcasse duquel est monté un berceau qui porte l'extrémité inférieure d'un ensemble ressort-amortisseur du bras de suspension, dont l'extrémité supérieure est fixée à un bras solidaire de la platine arrière.

Le berceau peut comporter deux goupilles qui s'étendent latéralement de part et d'autre de ce berceau et qui sont agencées pour coopérer avec deux crochets pour verrouiller le véhicule dans sa position normale. Ces crochets sont pivotants et articulés sur un support porté par une traverse couplée aux deux branches pivotantes.

Pour son maintien en position raccourcie, le véhicule comporte de préférence un vérin bloquant monté entre le moteur et la traverse portant les crochets.

Dans la forme de réalisation préférée, le véhicule comporte un arceau constituant une armature de siège, les extrémités de cet arceau étant pourvues de deux brides engagées respectivement dans les gorges longitudinales des parois latérales de la poutre centrale.

De préférence, la poutre centrale creuse comporte un support coulissant pour contenir au moins un accumulateur d'alimentation du moteur de propulsion électrique.

Selon une forme de réalisation avantageuse, l'habitacle est une cellule indépendante en matière synthétique dont au moins une partie des parois est doublée et incorpore des coussins d'air.

L'habitacle est avantageusement réalisé au moins partiellement selon une technologie de roto-moulage, de moulage de corps creux ou d'extrusion-soufflage.

Une partie des parois au moins est doublée et comporte des coussins d'air intégrés qui augmentent la sécurité des passagers en agissant comme amortisseurs de chocs et absorbeurs d'énergie.

L'habitacle est de préférence monté sur la poutre centrale creuse au moyen de pots engagés dans les gorges.

De façon avantageuse, lesdits pots sont au nombre de quatre, deux pots disposés de part et d'autre de l'axe de la poutre centrale creuse étant fixes et les deux autres étant coulissants dans lesdites gorges.

Dans la forme de réalisation préférée, la poutre centrale creuse contient un support coulissant contenant au moins une batterie d'accumulateurs pour l'alimentation du moteur électrique, et ledit support coulissant est solidaire de la platine arrière.

La poutre centrale creuse extrudée, fermée aux deux extrémités, constitue avantageusement un réservoir de carburant pour un moteur thermique.

De préférence, l'habitacle comporte plusieurs éléments assemblés par soudure, les lignes de soudure constituant des zones de renfort. Ledit habitacle constitue une cavité de survie liée à la poutre centrale creuse par des pots détachables en cas de choc.

Dans une forme de réalisation avantageuse, l'habitacle comporte des protubérances latérales pour constituer un marchepied et un absorbeur d'énergie ainsi que des moyens pour diffuser la lumière issue d'au moins une source.

La présente invention sera mieux comprise en référence à la description d'un mode de réalisation préféré et de ses variantes, et aux dessins annexés dans lesquels :
- la figure 1 représente une vue d'ensemble en élévation du véhicule routier ultra-léger selon l'invention,
- la figure 2 représente une vue de dessus du véhicule de la figure 1,
- la figure 3 est une vue frontale du véhicule des figures précédentes,
- la figure 4 représente une vue éclatée du véhicule selon l'invention, tel que représenté par les figures 1 à 3,
- la figure 5 représente une vue en perspective du châssis du véhicule selon l'invention,
- la figure 6 est une vue frontale du châssis du véhicule tel qu'il est représenté par la figure 5,

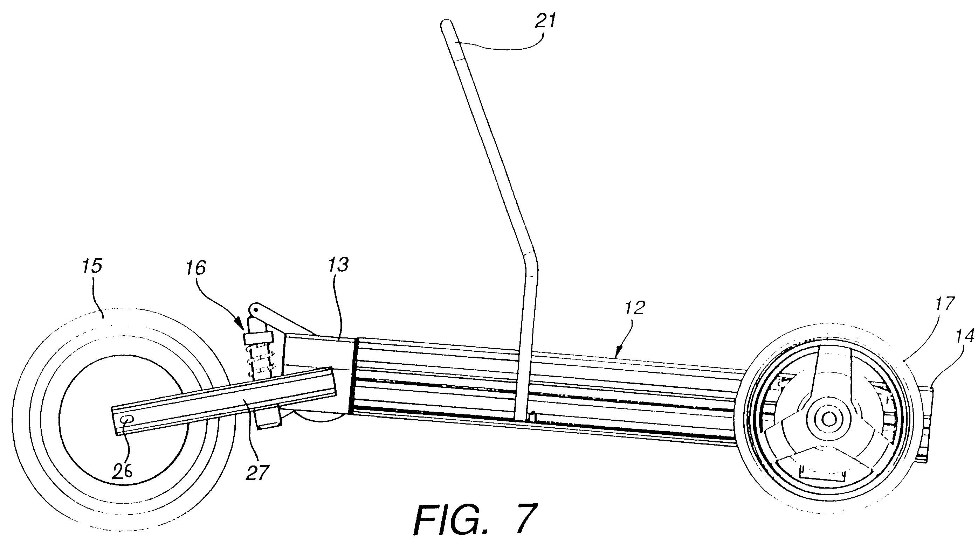

- la figure 7 est une vue latérale du châssis équipé des roues, dans sa position normale,

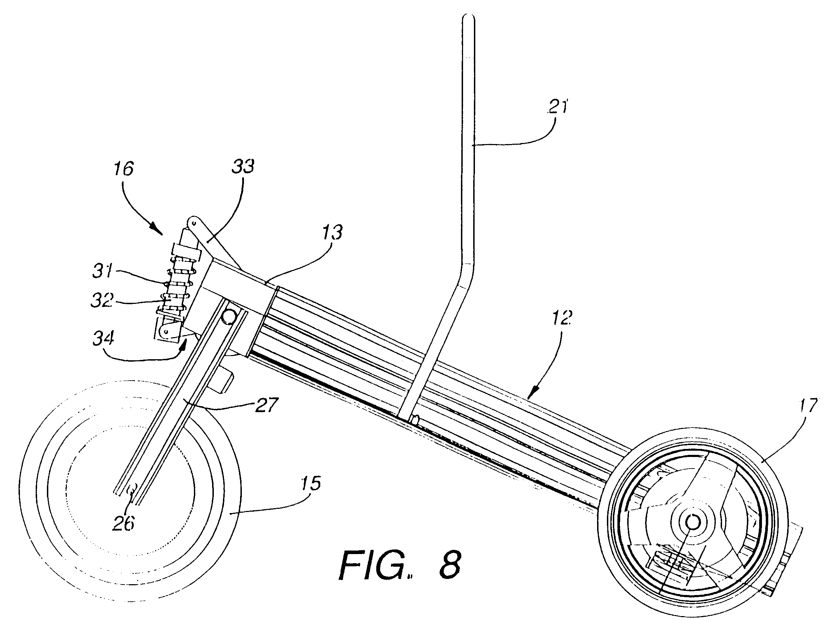

- la figure 8 est une vue similaire à celle de la figure 7, mais où le châssis est représenté dans sa position raccourcie,
- la figure 9 représente le châssis avec les roues, vu de dessus,
- les figures 10 et 11 représentent la roue arrière et sa suspension, vues en perspective, respectivement en position normale et en position raccourcie du véhicule, et
- les figures 12A et 12B représentent des vues partiellement coupées de l'habitacle ou cellule indépendante du véhicule.

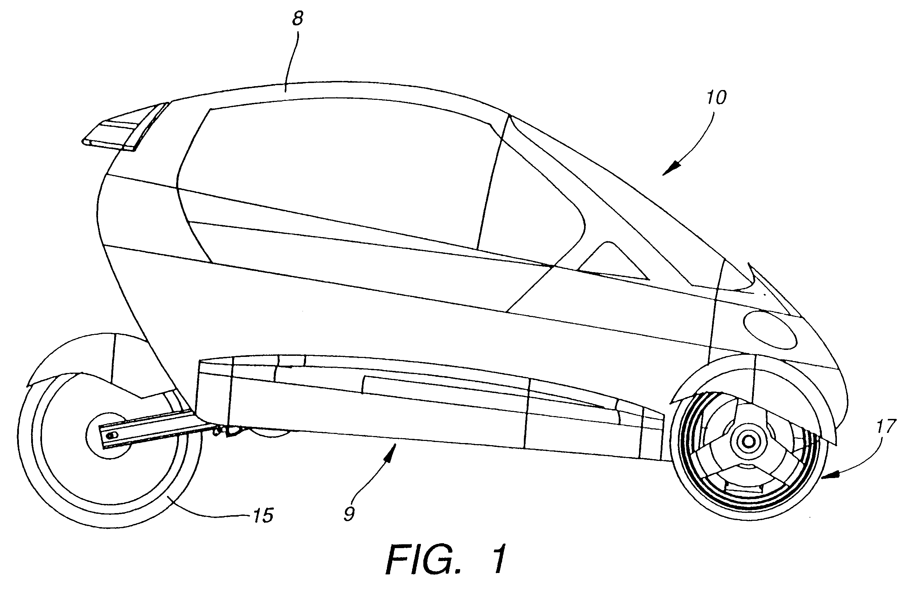

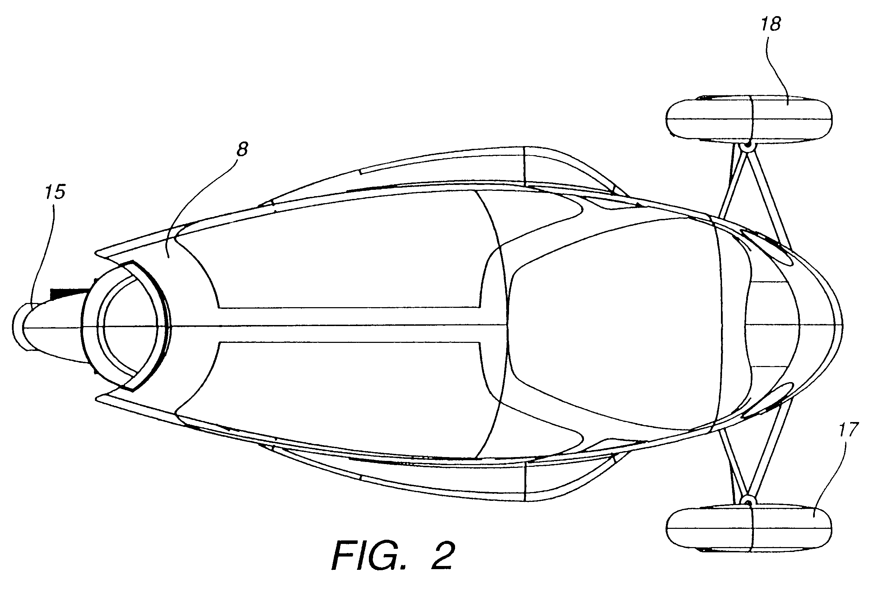

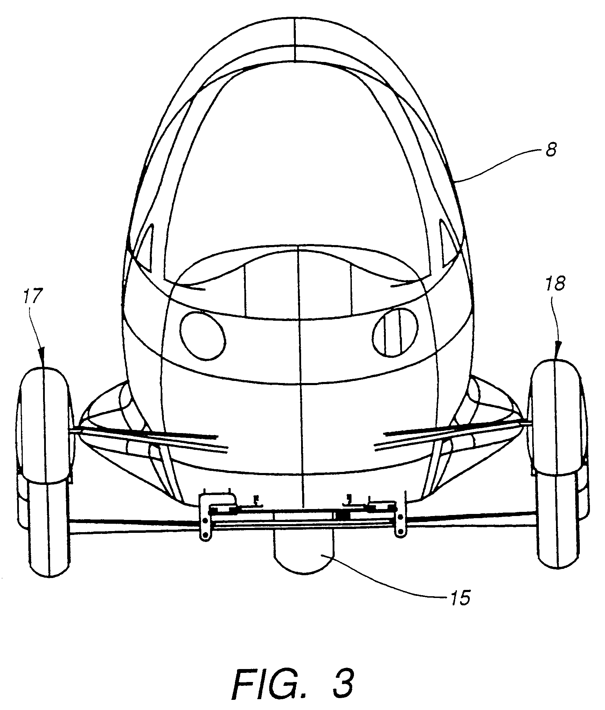

En référence aux figures, le véhicule routier ultra-léger 10 comporte principalement, comme le montrent les figures 1 à 3, une structure portante ou châssis 9 et un habitacle ou cellule 8, indépendante, montée sur ce châssis. Il est équipé de trois roues réparties de telle manière que l'une 15 est disposée à l'arrière, sensiblement dans le prolongement du châssis, et les deux autres 17 et 18 à l'avant, de part et d'autre de ce châssis. La roue arrière est motrice et les roues avant sont directrices.

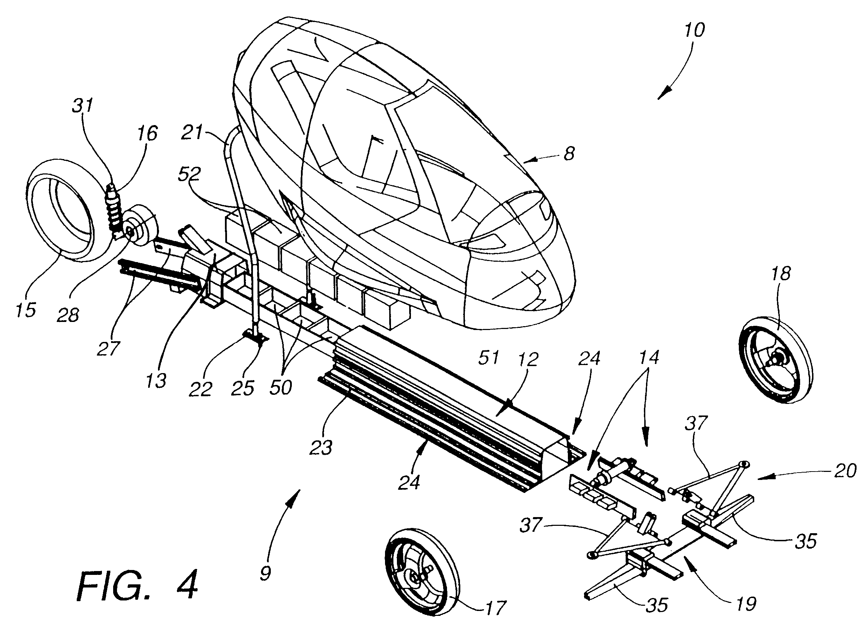

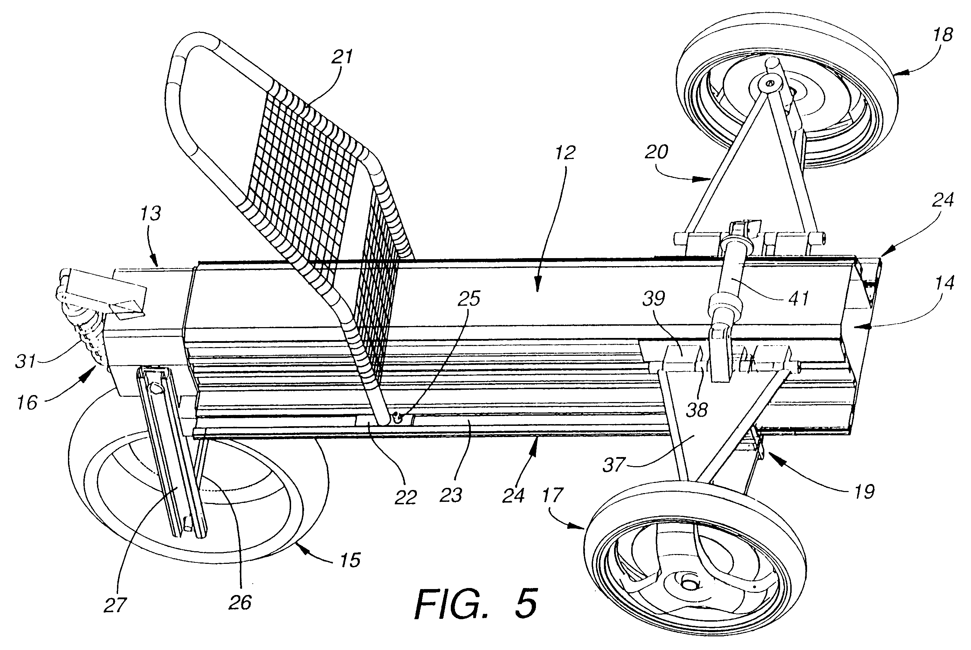

Comme le montre plus particulièrement les figures 4 et 5, le châssis comporte essentiellement une poutre centrale 12 creuse, réalisée au moyen d'un profilé en aluminium extrudé ayant une forme de T inversé, dans des profils d'extrémité respectifs de laquelle sont engagées une platine arrière 13 et deux platines avant 14.

La platine arrière 13 porte la roue arrière 15 du véhicule 10 et un organe ressort-suspension 16 de cette roue. Les platines avant 14 du véhicule 10 portent les roues avant 17 et 18 et leur suspension, respectivement 19 et 20. Un arceau constituant l'armature 21 du dossier réglable d'un siège, ce dossier étant fait d'un tissu tendu entre les bras de l'arceau, est par ailleurs fixé sur la poutre centrale. Plus spécialement, les extrémités de cet arceau sont pourvues de deux brides 22 qui sont respectivement engagées dans des gorges 23 de deux parois latérales 24 du profilé constituant ladite poutre centrale. Le blocage en position des brides 22, et par suite de l'arceau 21, s'effectue au moyen de goupilles à ressort 25, qui s'engagent dans des ouvertures ménagées dans les gorges 23.

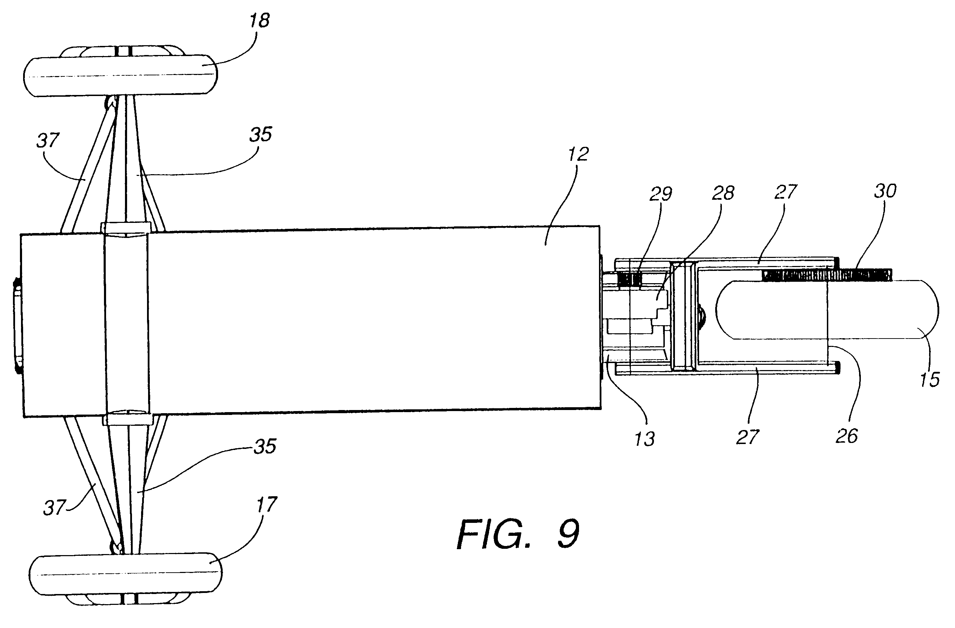

La roue arrière 15 est montée sur un axe 26 dont les extrémités sont portées par un bras de suspension 16 constitué de deux bras de suspension 27 qui définissent un support oscillant de cette roue. Les deux branches pivotantes sont articulées sur la platine arrière 13, à leur extrémité opposée à celle qui porte l'axe 26. Ce bras de suspension 16, par sa conception, permet au véhicule de prendre une position normale et une position raccourcie qui diminue son empattement, par le fait que les branches pivotantes 27, qui portent la roue 15, sont disposées sensiblement dans le prolongement de la poutre centrale 12 lorsque le véhicule est dans sa position normale et sont inclinées par rapport à cette poutre lorsque le véhicule est dans sa position raccourcie. La platine arrière 13 porte également un moteur électrique 28 dont l'arbre de sortie est équipé d'un pignon moteur 29 (voir figure 9) destiné à être couplé par une chaîne ou par une courroie à un pignon d'entraînement 30 solidaire de la roue arrière 15.

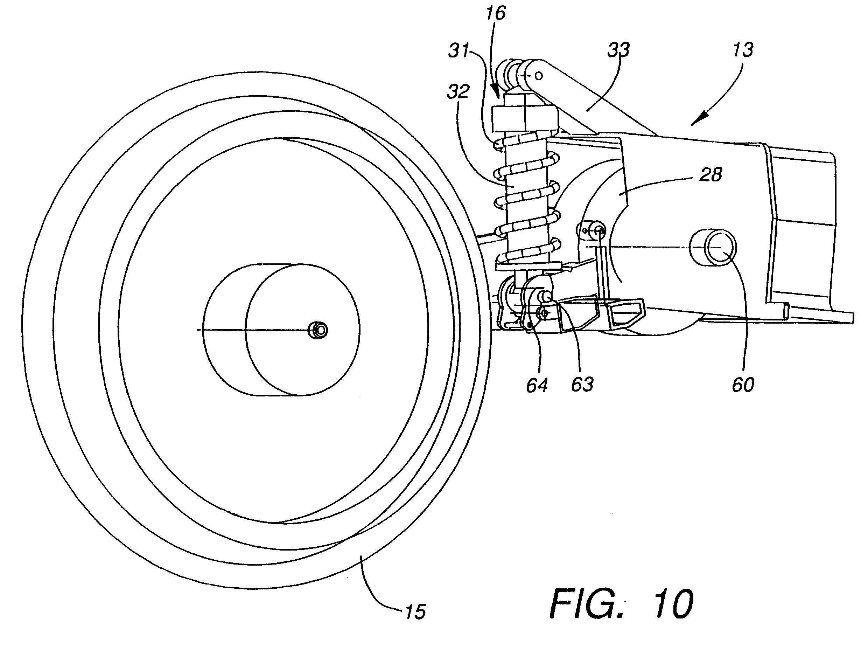

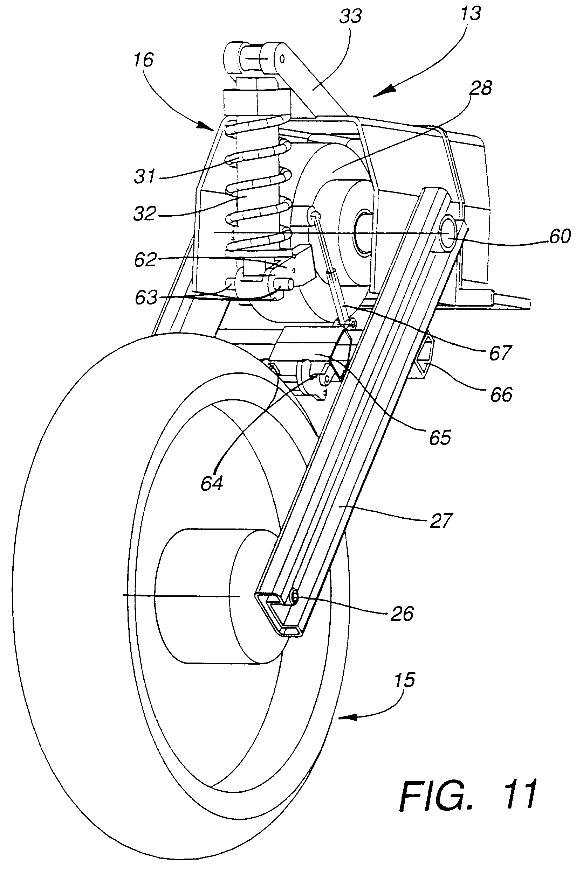

Le bras de suspension 16 comporte un ressort hélicoïdal 31 disposé coaxialement autour d'un amortisseur 32 qui est monté entre un bras rigide 33 solidaire de la platine 13 et un élément d'appui rigide qui sera défini par la suite en référence aux figures 10 et 11.

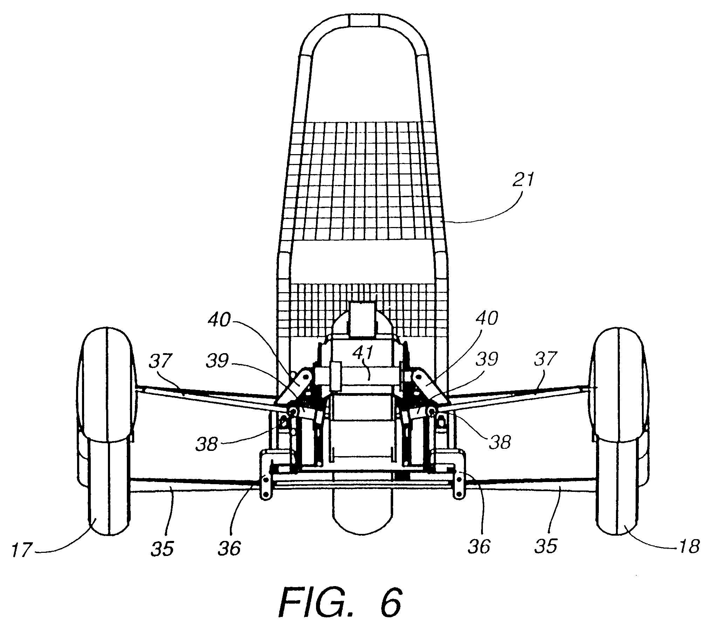

Les roues avant 17 et 18 sont reliées au châssis par des triangles de suspension solidaires de la platine avant 14, comme illustré plus particulièrement par la figure 6. Chaque roue est tenue par une lame de suspension inférieure 35 articulée sur une pièce 36 solidaire de la platine avant 14, et par un triangle de suspension supérieur 37 articulé sur un axe 38 tenu par un support approprié 39 solidaire de cette même platine avant 14. Chacun des deux triangles de suspension supérieur 37 est équipé d'un renvoi 40 disposé en oblique, les deux renvois étant reliés entre eux par un ressort-amortisseur 41 qui assure à la fois la suspension et l'amortissement de l'ensemble avant du véhicule. La lame de suspension inférieure 35 est de préférence du type composite.

Le véhicule est essentiellement destiné à une utilisation à propulsion électrique. La source d'énergie électrique est constituée par des accumulateurs qui sont logés à l'intérieur de la poutre centrale 12, sur un support coulissant dans la poutre et accessible par exemple par démontage de la platine arrière.

La figure 4 représente plus particulièrement l'intérieur de la poutre centrale 12, et en particulier un support coulissant comportant un ensemble d'alvéoles 50 ménagés dans ce support et destinés à recevoir une série d'accumulateurs 52. Pour leur mise en place et pour leur maintenance, les accumulateurs 52 sont d'abord déposés dans les alvéoles prévus à cet effet, puis le support coulissant est introduit dans la poutre centrale par une de ses extrémités, notamment par l'extrémité arrière, la platine arrière 13 étant solidaire du support coulissant 51, et guidée dans cette poutre. De ce fait, l'accès aux accumulateurs est facilité du fait que le support coulissant est supporté par la roue arrière.

D'autres organes, notamment les câbles du faisceau électrique, sont également logés à l'intérieur de la cavité de la poutre centrale 12.

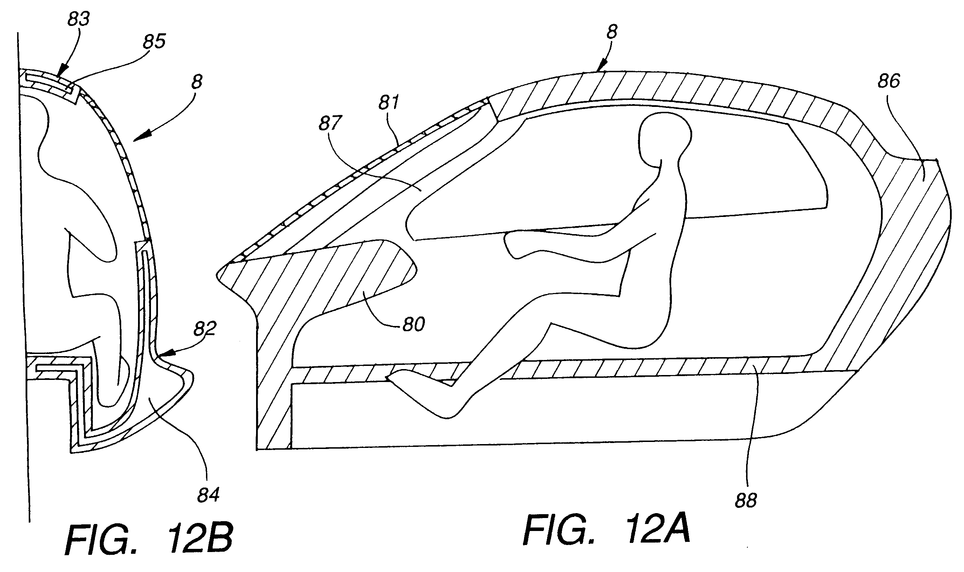

La cellule ou habitacle 8, qui sera décrite en référence aux figures 12A et 12B est montée sur la poutre centrale 12 par des moyens de fixation appropriés, notamment par emboîtement dans les gorges 23 de la poutre cenrale creuse 12 et par boulonnage ou similaire. Dans la pratique et selon un mode de réalisation avantageux, la cellule est fixée par quatre plots qui sont engagés dans les gorges de la poutre centrale. Deux de ces plots, par exemple les plots avant, sont fixés par des boulons et deux plots, par exemple les plots arrière, sont simplement tenus sans être fixés. De cette manière, la dilatation de la cellule et les changements de dimensions en longueur peuvent être facilement absorbés. La cellule se compose d'une carcasse en matière synthétique, par exemple en un matériau qui se prête aux techniques du roto-moulage ou de l'extrusion-soufflage.

La cellule est prévue pour deux places disposées l'une derrière l'autre. Cette conception permet d'obtenir une cellule bien profilée, aérodynamique et qui favorise l'abaissement du coefficient de pénétration dans l'air et par conséquent de la consommation.

Les figures 10 et 11 représentent plus particulièrement la roue 15 et le bras de suspension arrière 16 du véhicule, vus en perspective lorsque ce dernier est respectivement en position normale et en position raccourcie. Comme le montrent ces figures, la roue arrière est portée par les branches pivotantes 27 qui sont articulées sur la platine 13, et plus exactement sur un axe traversant 60 qui porte le moteur électrique 28, logé dans la platine 13. Ce moteur est monté librement sur cet axe au moyen d'un roulement. La carcasse de ce moteur porte un berceau 62, constituant ledit élément d'appui rigide défini précédemment, qui sert d'appui à l'extrémité inférieure de l'ensemble ressort 31 - amortisseur 32 du bras de suspension 16, dont l'extrémité supérieure est articulée sur le bras rigide 33. On notera que le berceau 62 comporte deux goupilles 63 qui s'étendent latéralement de part et d'autre de sa partie centrale. Ces goupilles 63 sont agencées pour coopérer avec deux crochets 64 articulés sur un support 65 monté sur une traverse 66 couplée aux deux branches pivotantes 27.

Dans la position normale représentée par la figure 10, les crochets 64 sont en prise avec les goupilles 63, de sorte que la suspension, à savoir l'ensemble ressort 31 - amortisseur 32, est opérationnelle, car couplée entre le châssis et les bras de suspension.

Dans la position raccourcie représentée par la figure 11, les crochets 64 sont désaccouplés par rapport aux goupilles 63 et le support de la roue est libre de pivoter autour de l'axe 60. C'est cette construction qui permet d'amener le véhicule en position raccourcie, dans le but de diminuer son empattement et de faciliter le parcage. Lorsque tout le dispositif ci-dessus est mécanique, cette manoeuvre s'effectue de la façon suivante :
- on déverrouille les crochets 64 qui sont commandés par un vérin hydraulique ou par un câble (non représenté)
- on actionne simultanément la pédale de frein (non représentée) qui bloque les roues avant et la pédale d'accélération qui fait tourner la roue arrière. De ce fait, l'arrière se soulève sous l'impulsion du moteur de traction.

Le maintien dans la position raccourcie ou dans une position intermédiaire est assuré par un vérin pneumatique bloquant 67 qui est ouvert pendant la phase de montée et dont les ouvertures se ferment en fin de course. La diminution de l'empattement par soulèvement de l'arrière du châssis s'effectue jusqu'à l'arrivée en butée du vérin 67 (voir figure 11).

Dans cette position bloquée en hauteur, il est possible d'enclencher la marche arrière ou la marche avant pour effectuer des manoeuvres de parcage ou similaires. Il est également possible de rouler en position raccourcie, le vérin 67 renvoyant l'effort dans la suspension de la roue arrière.

Pour ramener le véhicule dans sa position normale, qui correspond à son utilisation routière, il est prévu une commande qui débloque le vérin bloquant 67 et permet ainsi à l'arrière du véhicule de reprendre sa position normale par gravité.

Le système décrit ci-dessus est entièrement mécanique, mais il pourrait également être partiellement ou complètement automatisé.

Le système mécanique est avantageux étant donné qu'il ne comporte qu'un minimum de pièces et qu'il met l'amortisseur à contribution, ce qui permet d'amortir les chocs contre les trottoirs ou d'autres obstacles.

En référence aux figures 12A et 12B, l'habitacle 8 est constitué d'une cellule totalement indépendante qui peut être montée sur la poutre centrale creuse du véhicule au moyen de simples boulons. Cette cellule est réalisée avec des pièces en matière plastique et est multifonctionnelle en assurant à la fois la carrosserie extérieure avec des éléments tels que les supports des phares et des feux de signalisation, et l'habitacle intérieur en intégrant la planche de bord, l'isolation acoustique et l'assise notamment.

La vue en coupe 12A, montre la forme générale de la cellule qui intègre la planche de bord 80 et porte un pare-brise 81. La vue en coupe 12B montre une partie inférieure 82 et une partie supérieure 83 qui sont construites en double épaisseur avec coussins d'air 84, 85 intégrés. Les montants latéraux 87 qui portent en partie le pare-brise, l'extrémité arrière 86 de la cellule et le plancher 88 comportent avantageusement également des zones creuses qui constituent des coussins d'air et génèrent en outre un allègement de la cellule.

La cellule ou habitacle 8 est avantageusement constituée de plusieurs pièces, par exemple de trois pièces partiellement creuses pour former des coussins d'air pour absorber les chocs. Ces pièces sont de préférence assemblées par soudure pour constituer des zones de renfort le long des soudures.

La cellule peut se détacher du châssis par rupture des plots suite à une contrainte élevée, notamment en cas de choc. Grâce à la présence de coussins d'air qui constituent des absorbeurs de chocs, la cellule peut devenir un habitacle de survie ayant une énergie à dissiper plus faible que celle du reste du véhicule comportant le châssis, les roues, le moteur, etc..

La cellule comporte avantageusement des protubérances latérales servant de marchepied et constituant également des absorbeurs de l'énergie cinétique en cas de choc, notamment grâce à leur forme particulière.

Cette construction assure une excellente protection des passagers en cas de choc.

La cellule moulée en corps creux peut constituer un diffuseur de lumière grâce à plusieurs sources réparties dans la carrosserie pour éclairer tout ou partie du véhicule la nuit.

Le véhicule selon l'invention est particulièrement avantageux pour diverses raisons. D'une part tous les composants principaux sont aisément démontables et leur remplacement en cas de dommages peut se faire sans frais importants. L'assemblage est simple et n'utilise que des équipements ne nécessitant pas de gros investissements pour le montage. On notera en particulier que les suspensions des roues sont articulées sur les platines correspondantes, ce qui permet la réalisation de sous-ensembles prémontés. Ces platines sont encastrées et fixées au moyen de boulons à la poutre centrale creuse. Ce mode d'assemblage permet la réalisation du véhicule selon l'invention sans passer par les infrastructures lourdes habituelles de l'industrie automobile. Le montage revient à assembler des modules prémontés, ce qui permet notamment la création de petites unités d'assemblage à proximité des sites de vente et d'utilisation.

D'autre part, tous ces composants sont faits de matériaux recyclables. Au montage, tous les éléments opérationnels sont liés au châssis, de sorte que le véhicule est roulant en usine, même sans habitacle.

La maintenance est très simple et peut être effectuée par des personnes n'ayant pas une qualification exceptionnelle.

Le fonctionnement du véhicule est économique et les manoeuvres sont à la portée de quiconque.

Le fait que les passagers sont assis à califourchon sur la poutre centrale qui constitue vraiment la pièce principale, permet de réaliser un véhicule simple, comportant au moins dix à cent fois moins de pièces qu'un véhicule classique, à un prix réduit, tout en ayant une stabilité et une tenue de route remarquables et en présentant des garanties de sécurité particulièrement élevées.

## Revendications

1. Véhicule routier ultra-léger ne comportant qu'un faible nombre de composants, notamment un véhicule du type appelé "voiture de ville" à vocation pendulaire, en particulier à propulsion électrique, comportant une structure portante, deux roues avant et une roue arrière montées au moyen de suspensions sur cette structure portante et un habitacle indépendant adapté sur cette structure portante, la structure portante comportant une poutre centrale creuse, caractérisé en ce que ladite poutre centrale creuse (12) est constituée par un profilé de section constante extrudé en un matériau léger, en ce que les deux roues avant (17, 18) sont directrices et la roue arrière (15) est motrice et sensiblement située dans le prolongement de ladite poutre centrale (12), en ce que le moteur de propulsion (28) ainsi qu'une réserve d'énergie sont logés à l'intérieur de ladite poutre centrale creuse (12), et en ce que l'habitacle indépendant est intégralement fixé à la poutre centrale creuse (12).

2. Véhicule selon la revendication 1, caractérisé en ce qu'il comporte deux platines avant (14) et une platine arrière (13), ces platines étant agencées pour s'encastrer au moins partiellement dans des profils d'extrémité de ladite poutre centrale creuse, et en ce que ces platines sont adaptées pour porter respectivement les suspensions des roues avant (17, 18) et la suspension de la roue arrière (15).

3. Véhicule selon la revendication 1, caractérisé en ce que la poutre centrale creuse (12) a sur toute sa longueur un profil en T inversé dont la face inférieure est prolongée latéralement par deux parois latérales (24) disposées symétriquement par rapport à un plan longitudinal médian traversant cette poutre.

4. Véhicule selon la revendication 3, caractérisé en ce que les parois latérales (24) comportent chacune au moins une gorge longitudinale (23) agencée pour fixer des composants et/ou des accessoires.

5. Véhicule selon la revendication 2, caractérisé en ce que la platine arrière (13) porte un support de la roue arrière, ce support comprenant un organe ressort-suspension (16) et deux bras de suspension (27) dont une extrémité est fixée par un axe à cette platine et dont l'autre extrémité porte l'axe (26) de la roue arrière (15), cette dernière étant disposée entre ledit bras de suspension.

6. Véhicule selon la revendication 5, caractérisé en ce que la platine arrière (13) porte une extrémité d'un organe ressort-suspension (16), l'autre extrémité étant reliée aux bras de suspension (27) de la roue arrière.

7. Véhicule selon la revendication 5, caractérisé en ce que le bras de suspension de la roue arrière (15) est agencé pour permettre au véhicule de prendre une position normale et une position raccourcie, les branches pivotantes (27) portant la roue étant disposées sensiblement dans le prolongement de la poutre centrale (12) lorsque le véhicule est dans sa position normale, et ces branches étant inclinées par rapport à cette poutre centrale lorsque le véhicule est dans sa position raccourcie, cette position raccourcie étant atteinte par l'entraînement de la roue arrière motrice et le blocage simultané des roues avant directrices.

8. Véhicule selon la revendication 5, caractérisé en ce que les branches pivotantes (27) sont articulées sur la platine arrière (13) et montées sur un axe traversant (60) portant un moteur électrique (28) sur la carcasse duquel est monté un berceau (62) qui porte l'extrémité inférieure d'un ensemble ressort (31) - amortisseur (32) du bras de suspension (16) dont l'extrémité supérieure est fixée à un bras (33) solidaire de la platine arrière (13).

9. Véhicule selon la revendication 8, caractérisé en ce que le berceau (62) comporte deux goupilles (63) qui s'étendent latéralement de part et d'autre de ce berceau et qui sont agencées pour coopérer avec deux crochets (64) pour verrouiller le véhicule dans sa position normale.

10. Véhicule selon la revendication 9, caractérisé en ce que les crochets (64) sont pivotants et articulés sur un support (65) porté par une traverse (66) couplée aux deux branches pivotantes (27).

11. Véhicule selon la revendication 8, caractérisé en ce qu'il comporte un vérin bloquant (67) agencé pour maintenir le véhicule dans sa position raccourcie.

12. Véhicule selon la revendication 11, caractérisé en ce que le vérin bloquant (67) est monté entre le moteur (28) et la traverse (66) portant les crochets (64).

13. Véhicule selon la revendication 4, caractérisé en ce qu'il comporte un arceau (21) constituant une armature de siège, les extrémités de cet arceau étant pourvues de deux brides (22) engagées respectivement dans lesdites gorges longitudinales (23).

14. Véhicule selon la revendication 1, caractérisé en ce que la poutre centrale creuse (12) comporte un support coulissant pour contenir au moins un accumulateur (52) d'alimentation du moteur de propulsion électrique (28).

15. Véhicule selon la revendication 1, caractérisé en ce que l'habitacle (8) est une cellule indépendante en matière synthétique dont au moins une partie des parois est doublée et incorpore des coussins d'air.

16. Véhicule selon la revendication 15, caractérisé en ce que l'habitacle (8) est réalisé au moins partiellement selon une technique de roto-moulage, de moulage de corps creux ou d'extrusion-soufflage.

17. Véhicule selon la revendication 15, caractérisé en ce que l'habitacle (8) est monté sur la poutre centrale creuse (12) au moyen de plots engagé dans les gorges (23).

18. Véhicule selon la revendication 17, caractérisé en ce que lesdits plots sont au nombre de quatre, deux plots disposés de part et d'autre de l'axe de la poutre centrale creuse (12) étant fixes et les deux autres étant coulissants dans lesdites gorges (23).

19. Véhicule selon la revendication 1, caractérisé en ce que la poutre centrale creuse (12) contient un support coulissant (51) contenant au moins une batterie d'accumulateurs (52) pour l'alimentation du moteur électrique (28).

20. Véhicule selon la revendication 19, caractérisé en ce que ledit support coulissant (51) est solidaire de la platine arrière.

21. Véhicule selon la revendication 1, caractérisé en ce que la poutre centrale creuse (12) extrudée, fermée aux deux extrémités constitue un réservoir de carburant pour un moteur thermique.

22. Véhicule selon la revendication 15, caractérisé en ce que l'habitacle (8 comporte plusieurs éléments assemblés par soudure, les lignes de soudure constituant des zones de renfort.

23. Véhicule selon la revendication 15, caractérisé en ce que l'habitacle (8) constitue une cavité de survie liée à la poutre centrale creuse (12) par de pots détachables en cas de choc.

24. Véhicule selon la revendication 15, caractérisé en ce que l'habitacle (8) comporte des protubérances latérales pour constituer un marchepied et un absorbeur d'énergie.

25. Véhicule selon la revendication 15, caractérisé en ce que l'habitacle (8) moulé en corps creux comporte des moyens pour diffuser la lumière issue d'au moins une source.

## Claims

1. An ultra-light road vehicle comprising only a small number of components, specifically a vehicle of the type known as a "city car" for commuting use, in particular electrically propelled, comprising a supporting structure, two front wheels and one rear wheel mounted by suspensions on this supporting structure and a separate passenger compartment fitted on to the supporting structure, the supporting structure comprising a hollow central beam, characterized in that said hollow central beam (12) is constituted from an extruded section profile made of a lightweight material of constant cross-section, in that the two front wheels (17, 18) provide the steering and the rear wheel (15) provides the propulsion and lies approximately on the axis of said hollow central beam (12), in that the propulsion motor (28) and energy storage are housed inside the hollow central beam (12), and in that the separate passenger compartment is fixed as a unit to the hollow central beam (12).

2. Vehicle according to claim 1, characterized in that it comprises two front plates (14) and one rear plate (13), these plates being so constructed as to be lodged at least partially in the ends of the profiles of said hollow central beam, and in that these plates are adapted to carry, respectively, the suspensions of the front wheels (17, 18) and the rear wheel (15).

3. Vehicle according to claim 1, characterized in that the hollow central beam (12) comprises over its whole length the cross-section of an inverted T with its lower surface extended laterally in two lateral walls (24) arranged symmetrically with respect to the longitudinal median plane of this beam.

4. Vehicle according to claim 3, characterized in that the lateral walls (24) each comprise at least one longitudinal groove (23) designed to fix components and/or accessories.

5. Vehicle according to claim 2, characterized in that the rear plate (13) carries a support for the rear wheel, this support including a spring-suspension unit (16) and two suspension arms (27), of which one end is fixed by an axle to this plate and the end carries the axle (26) of the rear wheel (15) which is located between said suspension arms.

6. Vehicle according to claim 5, characterized in that the rear plate (13) carries one end of the spring-suspension unit (16), the other end being linked to the suspension arms (27) of the rear wheel.

7. Vehicle according to claim 5, characterized in that the suspension arm of the rear wheel (15) is arranged to enable the vehicle to take up a normal position or a shortened position, the pivoting arms (27) carrying the wheel being located approximately on the prolongation of the axis of the central beam (12) when the vehicle is in its normal position, and these arms being inclined with respect to this central beam when the vehicle is in shortened position, this shortened position being attained by the functioning of the rear drive wheel simultaneously with locking of the front steering-wheels.

8. Vehicle according to claim 5, characterized in that the pivoting arms (27) are articulated on to the rear plate (13) and mounted on a transverse axle (60) carrying an electric motor (28) on the housing of which is mounted a cradle (62) which carries the lower end of a combination of spring (31) and shock absorber (32) of the spring-suspension unit (16), the upper end of which is fixed to an arm (33) rigidly fixed to the rear plate (13).

9. Vehicle according to claim 8, characterized in that the cradle (62) carries two pins (63) which extend laterally either side of this cradle and are constructed so as to engage with two hooks (64) to lock the vehicle into its normal position.

10. Vehicle according to claim 9, characterized in that the hooks (64) are pivoted and articulated on to a support (65) carried on a cross-member (66) coupled to the two pivoting arms (27).

11. Vehicle according to claim 8, characterized in that it comprises a locking cylinder (67) designed to maintain the vehicle in its shortened position.

12. Vehicle according to claim 11, characterized in that the locking cylinder (67) is mounted between the motor (28) and the cross-member (66) carrying the hooks (64).

13. Vehicle according to claim 4, characterized in that it includes a bow (21) constituting a seat frame, the ends of this bow being equipped with two flange plates (22) each engaging in one of said longitudinal grooves (23).

14. Vehicle according to claim 1, characterized in that the hollow central beam (12) includes a sliding support to contain at least one accumulator (52) as power supply for the propulsive electric motor (28).

15. Vehicle according to claim 1, characterized in that the passenger compartment (8) is a separate cell which is made of synthetic material and at least part of which is double-skinned and incorporates air cushions.

16. Vehicle according to claim 15, characterized in that the passenger compartment (8) is constructed at least partially by a technique of rotational moulding, hollow moulding or blown extrusion.

17. Vehicle according to claim 15, characterized in that the passenger compartment (8) is mounted on the hollow central beam (12) by means of studs engaged in the grooves (23).

18. Vehicle according to claim 17, characterized in that said studs are four in number, two each side of the hollow central beam (12) being fixed, and the other two sliding in said grooves (23).

19. Vehicle according to claim 1, characterized in that the hollow central beam (12) contains a sliding support (51) containing at least one accumulator battery (52) providing the power supply for the propulsive electric motor (28).

20. Vehicle according to claim 19, characterized in that said sliding support (51) is rigidly fixed to the rear plate (13).

21. Vehicle according to claim 1, characterized in that the extruded hollow central beam (12), closed at both ends, constitutes a fuel tank for an internal combustion engine.

22. Vehicle according to claim 15, characterized in that the passenger compartment (8) comprises several component parts assembled by welding, the welding seams constituting zones of reinforcement.

23. Vehicle according to claim 15, characterized in that the passenger compartment (8) constitutes a survival cell attached to the hollow central beam (12) by studs which are detachable in case of impact.

24. Vehicle according to claim 15, characterized in that the passenger compartment (8) comprises lateral protuberances which serve as a step and as an energy absorber.

25. Vehicle according to claim 15, characterized in that the passenger compartment (8), constructed as a hollow moulding, includes means to diffuse light from at least one source.

## Patentansprüche

1. Ultraleichtes Straßenfahrzeug, das nur eine geringe Anzahl von Bauteilen umfaßt, insbesondere ein Fahrzeug vom Typ des sogenannten 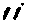 Stadtautos" für Pendelzwecke, insbesondere mit elektrischem Antrieb, bestehend aus einer Tragestruktur, zwei Vorderrädern und einem Hinterrad, die mit Hilfe von Aufhängungen auf dieser Tragestruktur montiert sind, und einem unabhängigen Karosseriegehäuse, das an diese Tragestruktur angepaßt ist, wobei die Tragestruktur einen hohlen Mittelträger umfaßt, dadurch gekennzeichnet, daß der hohle Mittelträger (12) von einem extrudierten Profil mit einem konstanten Querschnitt aus einem leichten Material gebildet wird, daß die beiden Vorderräder (17, 18) führend sind und das Hinterrad (15) antreibend und im wesentlichen in der Verlängerung des Mittelträgers (12) angeordnet ist, daß der Antriebsmotor (28) sowie eine Energiereserve im Inneren des hohlen Mittelträgers (12) angeordnet sind und daß das unabhängige Karosseriegehäuse zur Gänze an dem hohlen Mittelträger (12) befestigt ist.

2. Fahrzeug nach Anspruch 1, dadurch gekennzeichnet, daß es zwei Frontplatten (14) und eine Hinterplatte (13) umfaßt, wobei diese Platten derart angeordnet sind, daß sie zumindest teilweise in Endprofile des hohlen Mittelträgers eingreifen, und daß diese Platten derart angepaßt sind, daß sie die Aufhängungen der Vorderräder (17, 18) bzw. die Aufhängung des Hinterrades (15) tragen.

3. Fahrzeug nach Anspruch 1, dadurch gekennzeichnet, daß der hohle Mittelträger (12) auf seiner gesamten Länge ein Profil eines umgekehrten T aufweist, dessen Innenseite seitlich von zwei Seitenwandungen (24) verlängert ist, die symmetrisch in bezug zu einer mittleren Längsebene, die durch diesen Träger geht, angeordnet sind.

4. Fahrzeug nach Anspruch 3, dadurch gekennzeichnet, daß die Seitenwandungen (24) jeweils mindestens eine Längsrille (23) umfassen, die derart angeordnet ist, daß sie Bauteile und/oder Zubehörteile befestigt.

5. Fahrzeug nach Anspruch 2, dadurch gekennzeichnet, daß die Hinterplatte (13) eine Stütze für das Hinterrad trägt, wobei diese Stütze ein Tragfederelement (16) und zwei Aufhängungsarme (27) umfaßt, von denen ein Ende durch eine Achse an dieser Platte befestigt ist und das andere Ende die Achse (26) des Hinterrades (15) trägt, wobei letztgenanntes zwischen dem Aufhängungsarm angeordnet ist.

6. Fahrzeug nach Anspruch 5, dadurch gekennzeichnet, daß die Hinterplatte (13) ein Ende eines Tragfederelements (16) trägt, wobei das andere Ende mit den Aufhängungsarmen (27) des Hinterrades verbunden ist.

7. Fahrzeug nach Anspruch 5, dadurch gekennzeichnet, daß der Aufhängungsarm des Hinterrades (15) derart angeordnet ist, daß er es dem Fahrzeug ermöglicht, eine normale und eine verkürzte Position einzunehmen, wobei die Schwenkteile (27), die das Rad tragen, im wesentlichen in der Verlängerung des Mittelträgers (12) angeordnet sind, wenn sich das Fahrzeug in seiner normalen Position befindet, und diese Teile in bezug zu diesem Mittelträger geneigt sind, wenn sich das Fahrzeug in seiner verkürzten Position befindet, wobei diese verkürzte Position durch den Antrieb des antreibenden Hinterrades und die gleichzeitige Blockierung der führenden Vorderräder erreicht wird.

8. Fahrzeug nach Anspruch 5, dadurch gekennzeichnet, daß die Schwenkteile (27) auf der Hinterplatte (13) gelenkig angeordnet und auf einer Querachse (60) montiert sind, die einen Elektromotor (28) trägt, auf dessen Gehäuse ein Schlitten (62) montiert ist, der das untere Ende einer Feder (31) - Dämpfer (32) - Einheit des Aufhängungsarmes (16) trägt, dessen oberes Ende an einem Arm (33) befestigt ist, der mit der Hinterplatte (13) verbunden ist.

9. Fahrzeug nach Anspruch 8, dadurch gekennzeichnet, daß der Schlitten (62) zwei Stifte (63) umfaßt, die sich seitlich auf beiden Seiten dieses Schlittens erstrecken und die derart angeordnet sind, daß sie mit zwei Haken (64) zusammenwirken, um das Fahrzeug in seiner Normalposition zu verriegeln.

10. Fahrzeug nach Anspruch 9, dadurch gekennzeichnet, daß die Haken (64) schwenkbar und auf einer Stütze (65) gelenkig montiert sind, die von einer Querstrebe (66) getragen wird, die mit zwei Schwenkteilen (27) gekoppelt ist.

11. Fahrzeug nach Anspruch 8, dadurch gekennzeichnet, daß es einen blockierenden Zylinder (67) umfaßt, der derart angeordnet ist, daß er das Fahrzeug in seiner verkürzten Position hält.

12. Fahrzeug nach Anspruch 11, dadurch gekennzeichnet, daß der blockierende Zylinder (67) zwischen dem Motor (28) und der Querstrebe (66) angeordnet ist, die die Haken (64) trägt.

13. Fahrzeug nach Anspruch 4, dadurch gekennzeichnet, daß es einen Bogen (21) umfaßt, der einen Sitzbeschlag bildet, wobei die Enden dieses Bogens mit zwei Flanschen (22) versehen sind, die jeweils in die Längsrillen (23) eingreifen.

14. Fahrzeug nach Anspruch 1, dadurch gekennzeichnet, daß der hohle Mittelträger (12) eine gleitende Stütze umfaßt, um mindestens einen Akkumulator (52) zur Versorgung des elektrischen Antriebsmotors (28) zu enthalten.

15. Fahrzeug nach Anspruch 1; dadurch gekennzeichnet, daß das Karosseriegehäuse (8) eine unabhängige Zelle aus synthetischem Material ist, von der mindestens ein Teil der Wandungen verdoppelt ist und Luftpolster enthält.

16. Fahrzeug nach Anspruch 15, dadurch gekennzeichnet, daß das Karosseriegehäuse (8) zumindest teilweise nach einer Technik des Rotationsformens, des Formens von Hohlkörpern oder des Extrusionsblasens hergestellt wird.

17. Fahrzeug nach Anspruch 15, dadurch gekennzeichnet, daß das Karosseriegehäuse (8) auf dem hohlen Mittelträger (12) mit Hilfe von Kontaktstiften, die in die Rillen (23) eingreifen, montiert ist.

18. Fahrzeug nach Anspruch 17, dadurch gekennzeichnet, daß die Kontaktstifte in der Anzahl zu vier Stück vorhanden sind, wobei zwei Kontaktstifte, die auf beiden Seiten der Achse des hohlen Mittelträgers (12) angeordnet sind, fest sind und die beiden anderen in den Rillen (23) gleitend sind.

19. Fahrzeug nach Anspruch 1, dadurch gekennzeichnet, daß der hohle Mittelträger (12) eine gleitende Stütze (51) umfaßt, die mindestens eine Akkumulatorbatterie (52) für die Versorgung des Elektromotors (28) umfaßt.

20. Fahrzeug nach Anspruch 19, dadurch gekennzeichnet, daß die gleitende Stütze (51) mit der Hinterplatte verbunden ist.

21. Fahrzeug nach Anspruch 1, dadurch gekennzeichnet, daß der extrudierte, an beiden Enden geschlossene, hohle Mittelträger (12) einen Treibstoffbehälter für einen Thermomotor bildet.

22. Fahrzeug nach Anspruch 15, dadurch gekennzeichnet, daß das Karosseriegehäuse (8) mehrere verschweißte Elemente umfaßt, wobei die Schweißnähte Verstärkungszonen darstellen.

23. Fahrzeug nach Anspruch 15, dadurch gekennzeichnet, daß das Karosseriegehäuse (8) einen Überlebenshohlraum bildet, der mit dem hohlen Mittelträger (12) durch abnehmbare Kontaktstifte im Falle eines Aufpralls verbunden ist.

24. Fahrzeug nach Anspruch 15, dadurch gekennzeichnet, daß das Karosseriegehäuse (8) seitliche Ausstülpungen umfaßt, um ein Trittbrett und einen Energieaufnehmer zu bilden.

25. Fahrzeug nach Anspruch 15, dadurch gekennzeichnet, daß das Karosseriegehäuse (8), das zu einem Hohlkörper geformt ist, Mittel zur Verbreitung des Lichtes, das aus mindestens einer Lichtquelle kommt, umfaßt.
